# EUROPEAN PATENT APPLICATION

(11) **EP 2 728 541 A1**
(43) Date of publication of application: **07.05.2014**
(21) Application number: 13161484.4
(22) Date of filing: 27.03.2013
(51) Int. Cl.: G06Q 50/00, G06Q 30/02

(54) **System and method to provide a real-time live interaction between a celebrity and an audience**

(30) Priority: 31.10.2012 IN CH45422012; 06.12.2012 IN CH50782012
(71) Applicant: Sayyaparaju, Vikram Raju, 500033 Hyderabad (IN)
(72) Inventor: Sayyaparaju, Vikram Raju, 500033 Hyderabad (IN)
(74) Representative: Chaillot, Geneviève

(57) **Abstract**

An object of the invention is a system for creating a computing environment application framework for real-time live interaction between a celebrity and an audience/ fan club comprising: an interface to network; a computing environment application framework for organizing a session which includes plurality of users /fans who wish to interact with the celebrity; wherein the session is an interactive session during which the fans/ users and the celebrity can partake in one or more forms of intercommunication selected from the list comprising: (i) text messaging; (ii) audio communication; (iii) video communication; (iv) private chat and private group chat and public chat rooms; (v) virtual or physical gifts by fan(s); and (vi) video and voice message for events like birthdays, anniversaries, openings etc. may be purchased by any fan(s) on behalf of any other users or for himself. Another object of the invention is a method for creating a computing environment application framework for real-time live interaction between a celebrity and an audience/ fan club.

## Description

### FIELD OF THE INVENTION

The invention concerns the relationship between a celebrity and his/her audience. In particular, the present invention concerns augmenting the relationship between celebrities and their audience or fan club, by providing the celebrity and audience members with a real-time interaction in a time-efficient and cost-efficient manner by offering the audience members individual interactive sessions with the celebrity.

### BACKGROUND AND DESCRIPTION OF PRIOR ART

Generally, celebrities interact indirectly with their audiences via the media, such as when an interview with a celebrity is published in a magazine or broadcast on TV. Such indirect interactions are unidirectional in that the celebrity is exposed to the audience but the celebrity is unaware of the individual audience members. The individual members of the audience are only too aware that the celebrity is unaware of them and that the exposure is one sided.

People in present-day culture have a general fascination with public figures and celebrities, including those in entertainment, professional and amateur sports, business, media, or politics. Gossip and news programs are also of interest to the public communicated in such formats as print media, radio media, television media and on-line media. In recent years, reality shows have been produced for television in which people compete against each other in front of public figures, including celebrity judges. Although public figures and celebrity judges disseminate their thoughts to a competitor on such reality shows, a person in the audience has no way of interacting with the public figures or celebrity judges. Eventually, the person in the audience may lose interest in the show because there is no interaction possible.

Computer networks are used for many purposes including purchasing products online, locating special events, reading news stories, paying bills and playing games. Entertainment web sites may also be accessed on computer networks. Such entertainment web sites may focus on celebrity news and gossip, and are typically popular. In many of these entertainment web sites, a visitor may submit a comment or even a question to a posting wall or a type of message sending function. Submitting a comment or question, however, does not provide an experience of live real-time interaction environment with the celebrities.

Today's mobile consumers are inundated with dozens of handset and platform options. Enterprises are faced with the difficulty of creating applications that promote and extend their brand and trademarks on the various platform options that are chosen by consumers. Creating an application on each of these platforms can be an expensive process with, often, ineffective results.

What is needed is an application framework that can be utilized by the celebrity audience or fan club in order to provide an experience of live real-time interaction environment with the celebrities.

### SUMMARY OF THE INVENTION

In Aspects of the present disclosure provide for a method and a system of conducting a live, real-time reality show from hosts, celebrities, public figures, and an audience.

In another aspect of the present disclosure, the live real-time interaction is provided in different environments, yet at concurrent times. For example, such environments may be a computing environment including an online environment, a web-based environment, a mobile environment, a television environment; a radio environment; a wireless communications environment from a cellular phone (e.g., text, Voice calls or video call), mobile phone or smart phone or smart tabs or tabs or pads or ipad or from landline phones, or a general computing environment that includes email, blogs, and websites.

In accordance with a first aspect, the present invention is directed to providing a system and method for facilitating a real-time interactive session between a celebrity and his/her fan audience/ club, wherein an application framework platform is provided to the audience which may be used by the audience in order to have the real-time interactive session facilitated where in the platform provides audience with an integrated gateway which may be not limited to voice and video calls; virtual gifts by users; physical gifts by users; celebrity videos and photos; private chat and private group chat and public chat rooms and video and voice message for events like birthdays, anniversaries, openings etc. may be purchased by any user on behalf of any other users or for himself.

In an alternative embodiment, the application framework platform comprises a dedicated portal offering access to a number of celebrities, each having a dedicated listing.

The system further comprises a user database provides the at least one user has an ability to sing, dance, date, kiss, drink, tour, travel, action with, spend a day, fly with, etc. and further the celebrity is allowed to endorse other brands during their voice interactions and video interactions with the user.

The invention may be applied as a standalone system or as a component of an integrated software solution for programmable devices and their frameworks. The invention can be optionally integrated into existing business and processes seamlessly. It shall be understood that different aspects of the invention can be appreciated individually, collectively or in combination with each other.

If the sessions are real-time, online sessions, as may be the case in a preferred embodiment of the present invention, the celebrity and the audience may each log into an audio/video conferencing application, either embedded within the website, accessible therefrom, or separately configured, in order to actualize the session and communicate with each other. In another embodiment of the present invention, the session may take place over a telephone line. Further the session may be available to all users of the invention, or may be restricted to members of a subgroup of these users.

The term "celebrity" is used somewhat loosely herein and includes all persons or characters whose company is sought after by members of the public that have not previously directly met therewith. Typically celebrities have dedicated audiences by virtue of having attained a certain degree of fame or reputation in one or more fields that include, inter alia, the entertainment business, the performing arts, sports, politics, authors, lawyers, business personalities, doctors, medical professionals, science and the literary arts. Any person having fan following in a social network for e.g. anything more than 500 likes or followers may be considered to be a celebrity.

In one embodiment of the present invention, the audience or fan club of such a session may, at a pre-designated time, converse with the celebrity via an online audio/video conferencing application. Another medium of interaction that may be used by a audience or fan club and a celebrity for an interactive session is a telephone conversation, which may be a standard audio conversation or may be an audio-visual interactive experience by employing video-enabled telephones at both ends. Such a telephone-based session may be automatically initiated by means of an automatic switching system, configured to hide the caller IDs of the parties from each other.

Other methods that may be employed to protect the privacy of celebrities and users include providing the celebrities with dedicated telephones that cannot receive incoming messages or calls, but may only be used to make outbound calls. Such outward calling phones may be used by celebrities to initiate calls to buyers without exposing themselves to the possibility of being contacted thereby.

A preferred embodiment of the present invention may use a publicly accessible application platform, in which audience or fan club may browse listings of available celebrities, typically sorted into categories. Alternatively, the application framework platform may enable the audience or fan club to conduct a search for celebrities by certain criteria. Such an application framework may utilize a database for storage of its celebrity catalogue, as well as storage of other pertinent data such as data related to features discussed herein below, in a manner commonly employed in dynamic database-driven application framework. This data may be entered into the database via appropriate forms within the website, or via a separate application.

The aforesaid features are achieved individually and/or in combination, and it is not intended that the present disclosure be construed as requiring two or more of the features to be combined unless expressly required by the claims attached hereto.

The above summary relates to only one of the many embodiments of the invention disclosed herein and is not intended to limit the scope of the invention, which is set forth in the claims herein. These and other features of the present invention will be described in more detail below in the detailed description of the invention and in conjunction with the following figures.

### BRIEF DESCRIPTION OF THE DRAWINGS

The present invention is illustrated by way of example and not by way of limitation, in the figures of the accompanying drawings and in which like reference numerals refer to similar elements and in which:

FIG. 1 illustrates an example of a mobile device user's interaction with the mobile infrastructure platform (or application framework), in accordance with an embodiment of the present invention.

FIG.2 illustrates an example of how the mobile infrastructure platform (application framework) may be accessed on a mobile device, in accordance with an embodiment of the present invention.

### DETAILED DESCRIPTION

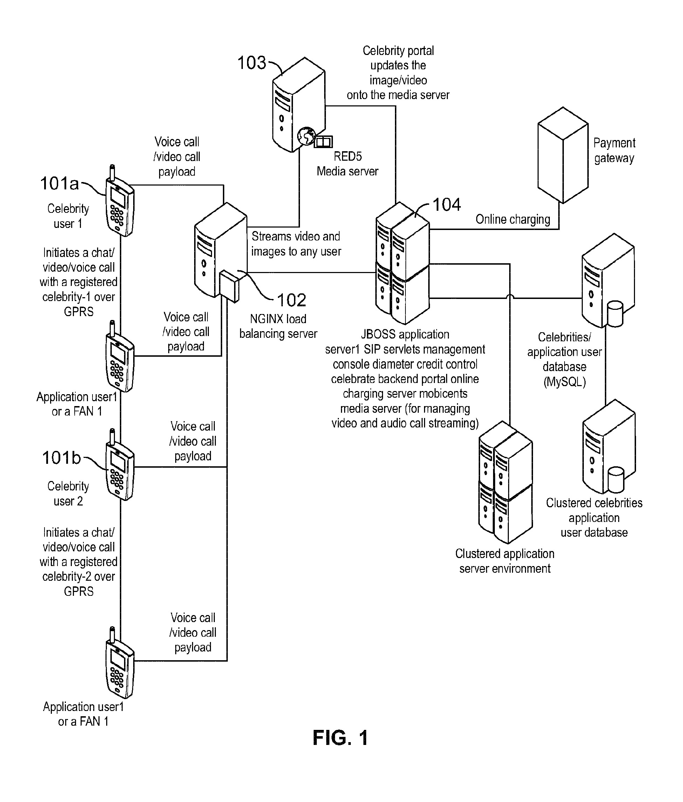

With reference to the drawings and, in particular, with reference to Figures 1-2, the invention will now be described in detail with reference to a few embodiments thereof as illustrated in the accompanying drawings. In the following description, numerous specific details are set forth in order to provide a thorough understanding of the present invention. It will be apparent, however, to one skilled in the art, that the present invention may be practiced without some or all of these entire specific details. In other instances, well known process steps and/or structures have not been described in detail in order to not necessarily obscure the present invention.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation..

The following description of the preferred embodiment(s) is merely exemplary in nature and is in no way intended to limit the invention, its application, or uses.

The features and advantages of the invention may be better understood with reference to the figures and discussions that follow. Referring to FIG. 1, an example of a mobile device user's interaction with the mobile infrastructure platform (or application framework) is shown wherein plurality of mobile device users 101 a, 101 b accesses the platform through the mobile device which may include different forms of communication, these forms of communication may be communicated to the hosts, celebrities or public figures using any type of communication available, either singly or in combination with others. For example, the forms of communication may be communicated, such as by wire, wirelessly, or even satellite, or any combination of wire, wireless, or satellite which are used by celebrity fans for a voice / video call with a celebrity. The mobile infrastructure platform may be coupled to a NGINX balancing load server 102 and a media server database 103 which aids to streams video and images to any user. The mobile infrastructure platform also allows payment 104 via credit card through a secured interface and/or supports payment via a redeemable internet currency.

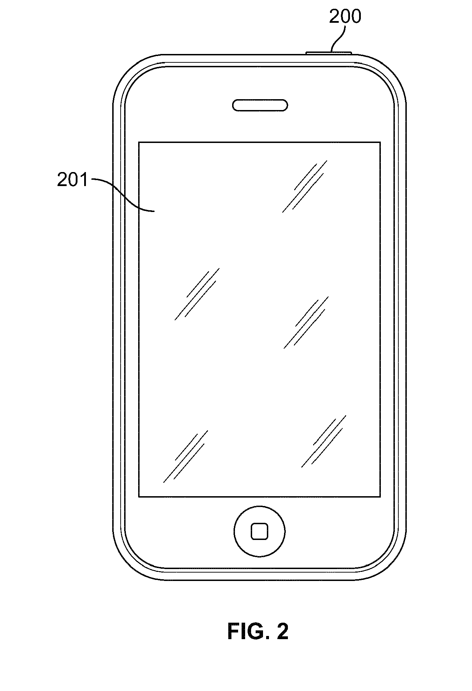

Referring to FIG. 2, an example of how the mobile infrastructure platform (application framework) may be accessed on a mobile device is shown. Many applications are available on mobile device 200. The mobile infrastructure platform (application framework) 201 may be accessed on the mobile device through an application on the mobile device as shown in FIG. 2. Thus, the mobile application is structured as a package for brand extension. The mobile application may include a navigation menu for accessing a plurality of pre-defined categories of branding features and submenus for providing access to specific functions within the pre-defined categories. The pre-defined categories may be determined depending on the targeted industry or targeted users. Thus, the developer may create the package based on what brand is being promoted as well as the target audience. The platform (application framework) 201 may then provide access to the pre-packaged features within the package.

In embodiments the mobile device 200 may be any device capable of wireless communication, including, but not limited to a mobile phone, cell phone, satellite phone, walkie-talkie, handheld device, personal digital assistant (PDA), mobile network appliance, or an email, instant messaging, or chat device. The phone embodiment of the mobile device 200 may be a cellular phone, satellite phone, a straight phone (i.e. "candy bar" phone), flip phone (i.e., "clamshell phone"). sliding top phone, wireless phone, 3G phone, 4G phone, 5G Phone, global positioning system (GPS) phone, MP3 phone, music phone, or other mobile phone operating system utilizing MIDP compatible software, Symbian, Macintosh, Android, windows, java, Blackberry or another proprietary operating system (e.g., Nokia, Sony Ericsson, Motorola, Apple, Windows, Blackberry, LG, Samsung, Sanyo, or Toshiba, etc.).

As can be appreciated from the description hereinabove, the invention may be used to substantially expand opportunities for interaction between celebrities and their audience, as well as to expand opportunities for advertisers to target celebrities and their fans.

Although the present invention has been described in terms of certain preferred embodiments and illustrations thereof, other embodiments and modifications to preferred embodiments may be possible that are within the principles and spirit of the invention. The above descriptions and figures are therefore to be regarded as illustrative and not restrictive.

Thus the scope of the present invention is defined by the appended claims and includes both combinations and sub combinations of the various features described hereinabove as well as variations and modifications thereof, which would occur to persons skilled in the art upon reading the foregoing description.

In the claims, the word "comprise", and variations thereof such as "comprises", "comprising" and the like indicate that the components listed are included, but not generally to the exclusion of other components.

The following claims are exemplary and are intended to include elements and steps described in the present disclosure in any combination or sub combination. Accordingly, there are any number of alternative combinations, which incorporate one or more elements from the present disclosure, including from the description, claims, and drawings, in various combinations or sub combinations. It will be apparent to those skilled in the relevant technology, in light of the present disclosure, that alternate combinations of various embodiments of the present disclosure, either alone or in combination with one or more other elements or steps, may be utilized as modifications or alterations or as part of the claims. It is intended that the written description of the present disclosure covers all such modifications and alterations.

## Claims

1. A system for creating a computing environment application framework for real-time live interaction between a celebrity and an audience/ fan club comprising: an interface to network; a computing environment application framework for organizing a session which includes plurality of users /fans who wish to interact with the celebrity; wherein the session is an interactive session during which the fans/ users and the celebrity can partake in one or more forms of intercommunication selected from the list comprising: (i) text messaging; (ii) audio communication; (iii) video communication; (iv) private chat and private group chat and public chat rooms; (v) virtual or physical gifts by fan(s); and (vi) video and voice message for events like birthdays, anniversaries, openings etc. may be purchased by any fan(s) on behalf of any other users or for himself.

2. The system of claim 1, wherein the computing environment application connects to a social network via an application programming interface and wherein each celebrity interacts with e at least one user with access to social network content.

3. The system of claim 1, further comprising a celebrity application user database for user's interaction with the computing environment application framework.

4. The system of claim 1, wherein the celebrity application user database provides the at least one user an ability to view or download images, video, audio or present a virtual gifts or physical gifts by users or other content pertaining to the celebrity.

5. The system of claim 1, wherein the celebrity application user database provides at least one user has an ability to Fly, Sing, Dance, Date, Kiss, Drink, Tour, Travel, Drive, Ride, Run, Swim, Work Out, Yoga, Meditation, Grooming, Cooking, Prayers, pilgrimage, leisure, Holiday, Shopping, Movie Watch, play an indoor, play an outdoor, play on video, Play on online, physical or virtual game, Action with, Spend a day; fly with celebrity.

6. The System of Claim 1, wherein celebrity is allowed to endorse other brands during their voice interactions and video interactions with the users.

7. The system of claim 1, further comprising a payment gateway using a credit/ debit card, mobile payment, online transfer or other method of payment by a third-party in connection via a secured interface for the organized sessions.

8. The system of claim 1, wherein the celebrity is based on the popularity of at least one of a Motion Picture, Television Show, Play, Movie Stars, Television Stars, Movie Directors, Television Personalities, Television Presenters, Musical Presentation, Music Directors, Choreographers, Cinematographers, Comedians, All Artists, Technical Cast & Crew for Motion Pictures & television and Television Affiliated Programs, Singers, Lyricists, Dancers, Sports Team, Sports Personalities, Political Personalities, Business Personalities, Corporate Personalities, Authors, Doctors, Models, Theatre Artists, Adult Movie Stars, Lawyers, Socialites or any personality who have a fan following in a social network for e.g. anything more than 500 likes or followers.

9. The system of claim 1, wherein the computing environment including an online environment, a mobile environment, a web-based environment, a television environment; a radio environment; a wireless communications environment from a cellular phone (e.g., text, voice call or video call), mobile phone, smart phone, smart tabs, tabs, pads or ipads or from landline phones, or a general computing environment that includes email, blogs, and websites.

10. A method for creating a computing environment application framework for real-time live interaction between a celebrity and an audience/ fan club, comprising: defining a session for interaction with the celebrity by plurality of users /fans; creating a computing environment application framework for at least one user to access content through at least one computing environment device; receiving the plurality of users/fans through one or more forms of intercommunication selected from the list comprising: (i) text messaging; (ii) audio communication; (iii) video communication; (iv) private chat and private group chat and public chat rooms; (v) virtual or physical gifts by fans and (vi) video and voice message for events like birthdays, anniversaries, openings etc. may be purchased by any fan on behalf of any other users or for himself.

11. The method of claim 9, wherein the session is a two way interaction session between the users/fans and the celebrity.

12. The method of claim 9, wherein the celebrity is based on the popularity of at least one of a a Motion Picture, Television Show, Play, Movie Stars, Television Stars, Movie Directors, Television Personalities, Television Presenters, Musical Presentation, Music Directors, Choreographers, Cinematographers, Comedians, All Artists, Technical Cast & Crew for Motion Pictures & television and Television Affiliated Programs, Singers, Lyricists, Dancers, Sports Team, Sports Personalities, Political Personalities, Business Personalities, Corporate Personalities, Authors, Doctors, Models, Theatre Artists, Adult Movie Stars, Lawyers, Socialites or any personality who have a fan following in a social network for e.g. anything more than 500 likes or followers.

13. The method of claim 9, further comprising a celebrity application user database for user's interaction with the computing environment application framework.

14. The method of claim 9, wherein the celebrity application user database provides at least one user has an ability to view or download images, videos, audio or present a virtual gifts or physical gifts by users or other content pertaining to the celebrity.

15. The method of claim 9, wherein the celebrity application user database provides the at least one user has an ability to Fly, Sing, Dance, Date, Kiss, Drink, Tour, Travel, Drive, Ride, Run, Swim, Work Out, Yoga, Meditation, Grooming, Cooking, Prayers, pilgrimage, leisure, Holiday, Shopping, Movie Watch, play an indoor, play an outdoor, play on video, Play on online, Physical or virtual game, Action with, Spend a day; fly with celebrity.

16. The method of claim 9, wherein the celebrity endorses other brands during their voice interactions and video interactions with the user.

17. The method of claim 9, further comprising a payment gateway using a credit/ debit card, mobile payment, online transfer or other method of payment by a third-party in connection via a secured interface for the organized sessions.

18. The method of claim 9, wherein the computing environment including an online environment, a mobile environment, a web-based environment, a television environment; a radio environment; a wireless communications environment from a cellular phone (e.g., text, video call or voice call), mobile phone or smart phone, smart tabs, tabs, pads or ipad or from landline phones, or a general computing environment that includes email, blogs, and websites.
